(19) Europäisches Patentamt
European Patent Office
Office européen des brevets

(11) **EP 1 831 035 B1**

(12) **FASCICULE DE BREVET EUROPEEN**

(45) Date de publication et mention
de la délivrance du brevet:
**11.03.2009 Bulletin 2009/11**

(21) Numéro de dépôt: **05850039.8**

(22) Date de dépôt: **06.12.2005**

(51) Int Cl.:
**B60C 15/024** *(2006.01)*

(86) Numéro de dépôt international:
**PCT/EP2005/056515**

(87) Numéro de publication internationale:
**WO 2006/069896 (06.07.2006 Gazette 2006/27)**

(54) **BOURRELET DE PNEUMATIQUE FACILITANT LE MONTAGE ET METHODE DE CONSTRUCTION D'UN TEL BOURRELET**

ERLEICHTERTE REIFENWULSTMONTAGE UND VERFAHREN ZUR HERSTELLUNG SOLCH EINER WULST

TYRE BEAD FACILITATING MOUNTING AND METHOD FOR MAKING SUCH A BEAD

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **24.12.2004 FR 0413957**

(43) Date de publication de la demande:
**12.09.2007 Bulletin 2007/37**

(73) Titulaires:
• **Société de Technologie Michelin**
  **63000 Clermont-Ferrand (FR)**
• **Michelin Recherche et Technique S.A.**
  **1763 Granges-Paccot (CH)**

(72) Inventeurs:
• **CAGNEAUX, Guy**
  **F-63160 Egliseneuve-pres-billom (FR)**
• **JANIN, Nicolas**
  **63200 Riom (FR)**

(74) Mandataire: **Diernaz, Christian**
  **M. F. P. Michelin,**
  **23, place des Carmes Dechaux,**
  **SGD/LG/PI-F35-Ladoux**
  **63040 Clermont-Ferrand Cedex 09 (FR)**

(56) Documents cités:
EP-B- 0 748 287          US-A1- 2002 020 480
US-A1- 2003 136 492      US-A1- 2004 194 865

EP 1 831 035 B1

**Description**

La présente invention concerne un pneumatique à armature de carcasse radiale destiné à être monté sur une jante dont au moins un siège est incliné vers l'extérieur et est prolongé axialement à l'extérieur par une saillie de faible hauteur. Elle concerne plus particulièrement les bourrelets d'un tel pneumatique, du type représenté par US 2004/0194865.

Un pneumatique destiné à être monté sur une jante dont au moins un siège est incliné vers l'extérieur est décrit par exemple dans la publication internationale WO 95/23073.

La structure des bourrelets de tels ensembles pneumatiques est décrite dans la publication internationale WO 95/23073 et comprend en particulier une partie formant un "talon" ("heel") prévu pour être situé axialement à l'intérieur du pneumatique et une pointe ("toe") de bourrelet prévue pour être située axialement à l'extérieur lorsque le pneumatique est monté sur sa jante de montage. Le profil externe de chaque bourrelet comprend une succession de parties, à savoir un siège de bourrelet destiné à venir en contact avec un siège de jante et axialement à l'extérieur une partie latérale de bourrelet destinée à venir en contact contre une saillie de jante située axialement à l'extérieur dans le prolongement du siège de la jante.

Ce pneumatique comprend en outre une armature de carcasse dont les extrémités sont ancrées dans chaque bourrelet à un dispositif d'ancrage, ledit dispositif d'ancrage étant formé d'au moins un élément de renforcement circonférentiel de bourrelet (comme une tringle ou un ensemble de fils ou câbles enroulés circonférentiellement) et d'un coin en mélange de caoutchouc de dureté élevée et de forme sensiblement triangulaire. Ce coin est, vu en coupe dans un plan méridien (c'est-à-dire contenant l'axe de rotation du pneumatique), limité par une face latérale radialement extérieure et une face radialement intérieure et enfin une face reliant les deux faces précédentes et située axialement à l'extérieur, de façon que le sommet du coin opposé à ladite face latérale soit situé radialement vers l'intérieur de l'élément de renforcement circonférentiel de bourrelet. L'armature de carcasse est ancrée à chacune de ses extrémités sur ledit dispositif d'ancrage au moyen d'un retournement qui s'enroule, au moins partiellement, autour de l'élément de renforcement circonférentiel de bourrelet et se prolonge dans ou autour du coin en mélange de caoutchouc de dureté élevée.

Par ailleurs, on monte avec ce pneumatique un appui interne destiné à servir de support en cas de perte partielle ou totale de pression interne de gonflage dans le pneumatique.

Le brevet US5836366 décrit un tel ensemble pneumatique formé d'un pneumatique, d'une jante de montage et d'un anneau de soutien. Ce document décrit en particulier une méthode de montage du pneumatique et de l'appui interne sur la jante de montage. Cette méthode est notamment décrite à l'aide des figures 2A à 2D dudit brevet. Selon cette méthode, les bourrelets pour être mis en place sur la jante de montage doivent être dans un premier temps déplacés axialement vers l'extérieur de la jante avant d'être mis en place sur leur siège respectif.

Dans cette dernière opération du montage, on engage à nouveau le bourrelet sur son siège de manière partielle (c'est-à-dire sur un secteur angulaire de grande dimension correspondant à plus de 180°), jusqu'à terminer complètement le montage au moyen d'outils usuels de montage. Au cours de cette dernière opération, on a constaté des difficultés de passage de la saillie (hump) de la jante par le bourrelet : ces difficultés se traduisent par des efforts accrus sur le bourrelet avec un risque de blessure sur ledit bourrelet ou bien encore une mauvaise mise en place du bourrelet sur la jante avec toutes les conséquences que cela peut entraîner.

L'invention a pour but de proposer une géométrie de bourrelet de pneumatique se montant sur une jante dont au moins un siège est incliné vers l'extérieur telle que le montage du pneumatique sur sa jante de montage s'en trouve facilité tout en assurant un bon montage. L'invention a également pour but de proposer une méthode de construction des bourrelets de pneumatique se montant sur une jante dont au moins un siège est incliné vers l'extérieur.

Le pneumatique, selon l'invention, est destiné à être monté sur une jante de montage comprenant des sièges de jante inclinés vers l'extérieur, c'est-à-dire que ces sièges de jante ont, vu dans un plan de coupe contenant l'axe de rotation, une forme tronconique dont la génératrice rectiligne est inclinée par rapport à l'axe de rotation, les points axialement les plus à l'extérieur de chaque génératrice étant situés sur un cercle de diamètre inférieur au diamètre du cercle sur lequel sont situés les points de la même génératrice axialement les plus à l'intérieur, chaque siège se prolongeant axialement vers l'extérieur par une saillie (ou hump). Cette saillie est, vue en coupe méridienne (c'est-à-dire dans un plan contenant l'axe de rotation), reliée à la génératrice du siège par un arc de cercle de raccordement de rayon R.

Selon l'invention, le pneumatique comprend des bourrelets destinés à venir en contact avec ladite jante de montage, chaque bourrelet comprenant une armature de renforcement circonférentiel destinée à ancrer une armature de carcasse du pneumatique, le profil externe du bourrelet, vu en coupe méridienne, comprenant une partie formant siège de bourrelet, cette partie étant destinée à venir en contact avec le siège de jante, ce siège de bourrelet étant prolongé axialement à l'extérieur et radialement vers l'extérieur par une paroi latérale destinée à venir en contact avec la saillie de la jante de montage, le siège de bourrelet étant réuni à la paroi latérale par un profil de raccordement. Ce pneumatique est caractérisé en ce qu'au moins un bourrelet est tel que la distance maximale L1 du centre de rotation de l'armature de renforcement circonférentiel de bourrelet aux points du profil de raccordement et la distance minimale L0 du centre de rotation de l'armature de renforcement circonférentiel de bourrelet au profil latéral de bourrelet satisfont la relation suivante : K < 1%, avec K=(L1-L0)/L1.

Par centre de rotation de l'armature de renforcement circonférentiel de bourrelet, il faut comprendre le centre de rotation de la section de ladite armature, vu dans un plan méridien (c'est-à-dire contenant l'axe de rotation), dans le mouvement final de mise en place du dernier bourrelet sur la jante. En pratique, dans cette dernière étape de mise en place, ce centre de rotation est sensiblement fixe par rapport à la jante dès lors que l'armature de renforcement circonférentiel de bourrelet est quasiment en place sur un grand secteur angulaire (c'est-à-dire sur une grande longueur circonférentielle). C'est dans cette configuration que sont mesurées les distances audit centre de rotation.

Avec un bourrelet selon l'invention, il est possible de réduire sensiblement les efforts au passage de la saillie et notamment les contraintes de compression et de cisaillement dans les matériaux présents entre l'armature de renforcement circonférentiel de bourrelet et le profil de raccordement du bourrelet.

Préférentiellement, le rapport K est choisi de façon que les contraintes de compression soient très inférieures à la contrainte de compression du matériau du bourrelet en contact avec la jante et correspondant à une déformation de compression de 1%.

Avantageusement, ce rapport K est inférieur à 0.6%.

Un bourrelet selon l'invention conduit le plus souvent à avoir un profil de raccordement entre le siège de bourrelet et la paroi latérale dudit bourrelet qui, une fois le pneumatique monté sur sa jante de montage et gonflé à sa pression nominale, ne touche pas l'arc de cercle de raccordement du siège de jante.

L'invention peut être mise en oeuvre sur l'un des bourrelets d'un pneumatique ou préférentiellement sur les deux.

Un autre objet de l'invention concerne une méthode de construction du profil externe d'un bourrelet de pneumatique destiné à être monté sur une jante de montage permettant de faciliter le montage du pneumatique sur sa jante de montage, cette jante de montage comprenant des sièges de jante inclinés vers l'extérieur, c'est-à-dire que ces sièges de jante ont une forme tronconique dont la génératrice est inclinée par rapport à l'axe de rotation, les points axialement les plus à l'extérieur de chaque génératrice étant situés sur un cercle de diamètre inférieur à celui du cercle sur lequel sont situés les points de la même génératrice axialement les plus à l'intérieur, chaque siège se prolongeant axialement vers l'extérieur par une saillie (ou hump), cette saillie ayant une paroi tronconique dont la génératrice est inclinée de façon à être sensiblement perpendiculaire à la génératrice du siège qu'elle prolonge, ladite génératrice de paroi de saillie étant, vue en coupe méridienne (c'est-à-dire dans un plan contenant l'axe de rotation), reliée à la génératrice du siège par un arc de cercle de raccordement de rayon R.

Par ailleurs, ce pneumatique comprend des bourrelets destinés à venir en contact avec ladite jante de montage, chaque bourrelet comprenant une armature circonférentielle de renforcement destinée à ancrer une armature de carcasse du pneumatique, le profil externe du bourrelet, vu en coupe méridienne, comprenant une partie formant siège de bourrelet, cette partie étant destinée à venir en contact avec le siège de jante, ce siège de bourrelet étant prolongé axialement et radialement vers l'extérieur par une paroi latérale destinée à venir en contact avec la paroi de saillie de la jante de montage, un profil de raccordement reliant le siège de bourrelet à la paroi latérale dudit bourrelet.

La méthode de construction selon l'invention est caractérisée en ce que :

- on fait un relevé, dans un plan contenant l'axe de rotation, du profil de la jante comprenant en particulier le profil du siège, le profil de la saillie et le profil du raccordement entre ce siège et cette saillie ;

- on place l'armature de renforcement circonférentiel de bourrelet dans la position qu'elle occupe une fois le pneumatique monté sur sa jante;

- on construit le profil de bourrelet externe à partir du profil de jante, c'est-à-dire en reproduisant au moins en partie le profil du siège de jante et au moins en partie le profil de la saillie de jante, le profil de raccordement du profil de bourrelet étant construit de manière à être situé radialement à l'extérieur du profil de jante.

Par profil de raccordement radialement à l'extérieur d'un profil géométrique donné, on entend ici que tous ou quasiment tous les points dudit profil de raccordement sont à une distance de l'axe de rotation du pneumatique supérieure à la distance du point correspondant sur le profil géométrique, le point correspondant étant obtenu par l'intersection d'une droite perpendiculaire à l'axe de rotation et passant par le point du profil de raccordement. L'exception mentionnée s'applique au moins aux points d'extrémité du profil de raccordement.

Cette construction est améliorée en tenant compte des déformations de compression des matériaux composant le bourrelet une fois le pneumatique en place sur sa jante de montage, c'est-à-dire en modifiant les profils de siège et de paroi latérale de bourrelet de manière à ajouter les déformations de compression des matériaux composant le bourrelet résultant du montage du pneumatique sur sa jante. Par ajouter des déformations de compression, on entend ici que le profil de siège de bourrelet est décalé radialement vers l'intérieur par rapport au profil de siège de la jante d'une quantité correspondant auxdites déformations de compression.

D'autres caractéristiques et avantages de l'invention ressortent de la description faite ci-après en référence aux dessins annexés qui montrent, à titre d'exemples non limitatifs, des formes de réalisation de l'objet de l'invention.

La figure 1 montre partiellement une coupe d'une jante dont le siège est incliné vers l'extérieur et destinée à recevoir un bourrelet de pneumatique ;

La figure 2 montre partiellement une coupe d'un bourrelet selon l'invention ;

La figure 3 montre une coupe du bourrelet de la figure 2 dans une phase intermédiaire de montage sur sa jante telle que montrée à la figure 1 ;

La figure 4 illustre schématiquement la construction d'un bourrelet selon l'invention à partir d'un profil de jante.

Pour en faciliter la lecture, la description qui suit emploie les mêmes signes de référence pour désigner des éléments semblables dès lors que ces signes de référence désignent des élément identiques au moins dans leur fonction.

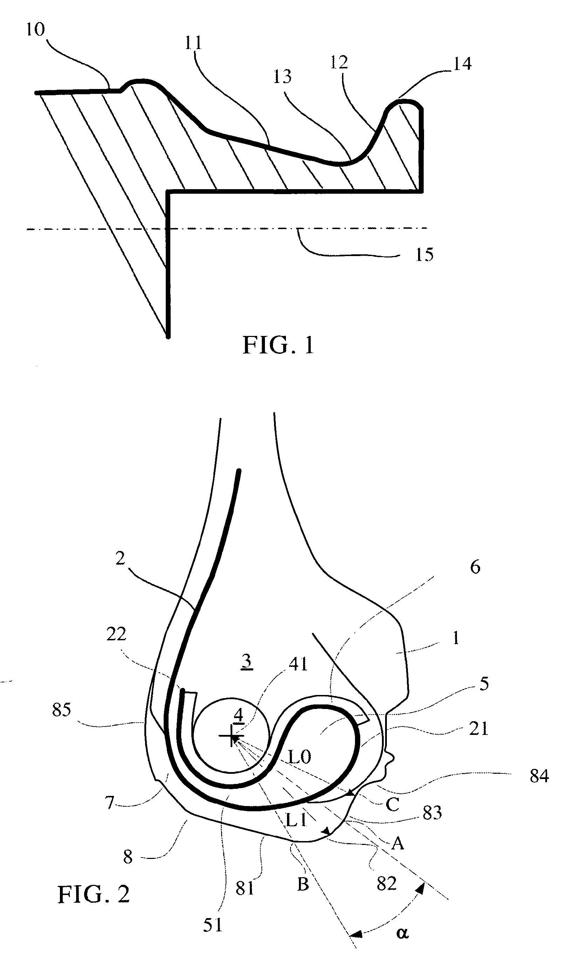

La figure 1 montre une coupe méridienne d'une jante de montage 10 d'un pneumatique dont au moins un siège 11 est dit "incliné vers l'extérieur", c'est-à-dire dont les points axialement les plus à l'intérieur sont situés sur un cercle de plus grand diamètre que celui sur lequel sont situés les points axialement les plus à l'extérieur. Cette jante 10 comprend un siège 11 sensiblement rectiligne et incliné d'un angle de 15° avec l'axe de rotation 15. Ce siège 11 est prolongé axialement et radialement vers l'extérieur par une saillie dont la paroi 12 axialement à l'intérieur a la forme d'un arc de cercle présentant une concavité orientée vers l'intérieur de la jante. Cette paroi 12 de saillie se prolonge radialement à l'extérieur par un rebord 14. Enfin, le siège 11 est raccordé à la paroi de saillie 12 par un profil de raccordement 13 en forme d'arc de cercle.

Par vue en coupe méridienne, on entend ici que la figure est réalisée dans un plan de coupe comprenant l'axe de rotation du pneumatique. De même, on entend par "radialement à l'intérieur d'un élément" une position localisée entre ledit élément et l'axe de rotation du pneumatique, et par "axialement à l'intérieur" une position située du côté de la cavité limitant la pression de gonflage du pneumatique.

La figure 2 montre en coupe méridienne (c'est-à-dire dans un plan contenant l'axe de rotation) un bourrelet 1 d'un pneumatique destiné à être monté sur une jante telle que montrée avec la figure 1. Ce bourrelet 1 comprend armature de carcasse 2 dont une extrémité passe radialement sous une tringle 4 formant une armature de renforcement circonférentiel pour former une boucle 21 entourant un noyau profilé 5 en mélange de gomme dure, ledit noyau 5 ayant la forme d'un coin dont une pointe 51 est positionnée radialement sous la tringle 4. Après avoir fait le tour complet du profilé 5, l'extrémité 22 de l'armature de carcasse 2 est coincée axialement entre l'armature elle même et la tringle 4.

Dans le cas présent les deux bourrelets du pneumatique de dimension 205-650 R 440 A sont construits selon l'invention et permettent en conséquence un montage facilité desdits deux bourrelets.

Ce bourrelet 1 comprend en outre un premier mélange de caoutchouc formant un protecteur 7 prévu pour être en contact avec la jante lorsque le pneumatique est monté sur sa jante de montage (dimension 205x440) : ce mélange de protecteur 7 est choisi pour ses performances en usure par frottement et pour ses capacités à résister à la compression.

Un autre mélange de caoutchouc forme un écran 6 entre l'armature de carcasse 2 et la tringle 4 et permet d'éviter ainsi tout risque de contact direct. La tringle 4 est de section circulaire et formée d'une pluralité de fils métalliques torsadés entre eux ; cette tringle est surmontée par un matériau de remplissage 3.

La figure 1 montre également le profil ou contour externe 8 du bourrelet. Ce profil 8 est formé d'une succession de parties de profil : une partie interne 85 correspond à la partie du profil 8 qui n'est pas en contact avec la jante, une partie de siège 81 destinée plus particulièrement à venir en contact avec le siège d'une jante, une partie latérale 83 sensiblement rectiligne et destinée à venir en contact avec la saillie de la jante, une partie de raccordement 82 assurant la liaison entre les parties de siège 81 et latérale 83.

Le profil 81 se termine en un point B et se prolonge à partir de ce point B jusqu'à un point A par le profil de raccordement 82. L'angle α du secteur dont le sommet est pris au centre de la tringle 4 et passant par les points A et B est ici égal à 22°. Avantageusement, cet angle est au moins égal à 10°. Le profil latéral 83 se prolonge axialement et radialement vers l'extérieur par un profil courbe 84 formant la partie radialement la plus à l'extérieur de la saillie de jante. Cette partie courbe 84 se raccordant tangentiellement en un point C du profil latéral 83.

Dans le bourrelet 1 selon l'invention, le profil de raccordement 82 et le profil latéral 83 sont tels que, si on note L1 la distance maximale entre le centre de rotation 41 de la tringle 4 et la partie de profil de raccordement 82 et L0 la distance minimale entre le même centre de rotation 41 et la partie latérale 83, le rapport K, défini comme le rapport ((L1-L0)/L1, est au plus égal à 1% (1/100). Dans le cas présent, la valeur de ce rapport K est de 0.51 % (0.51/100)

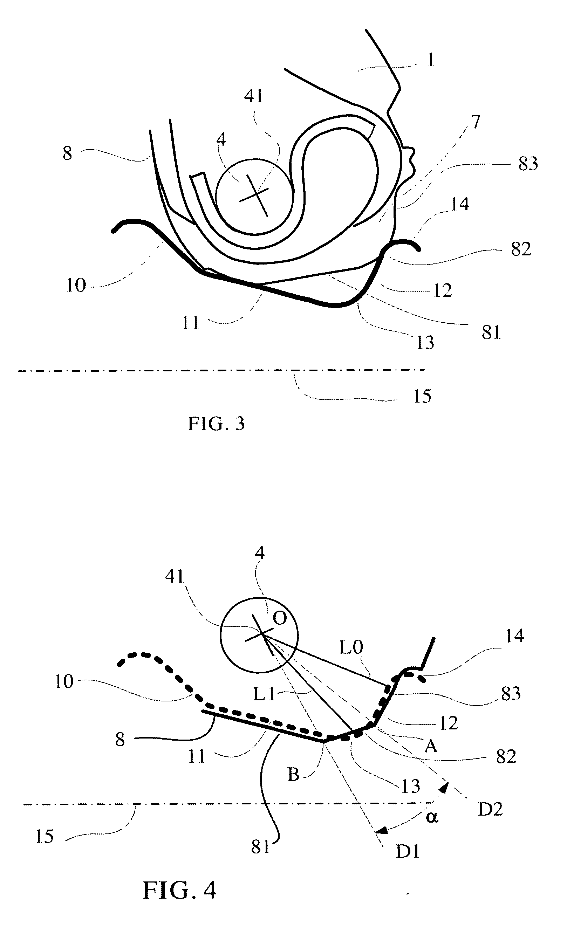

La figure 3 montre le bourrelet 1 de la figure 2 en cours de montage sur une jante 10 telle que montrée à la figure 1. Dans cette configuration, on montre une section prise sur un secteur circonférentiel pour lequel le montage n'est pas encore réalisé : à l'exception de ce secteur le bourrelet est en place sur sa jante sur une grande partie du tour de roue. Dans cette position, on note que le montage du bourrelet s'effectue par une sorte de rotation ou torsion autour du centre géométrique 41 de la tringle 4 sans pratiquement aucun déplacement dans le sens axial, compte tenu de la très importante rigidité d'extension de la tringle dans le sens circonférentiel. Dans ce mouvement de rotation (équivalent ici à une torsion localisée) la partie de raccordement 82 du profil externe 8 du bourrelet vient en contact avec la partie 14 de la saillie de la jante.

Par les valeurs choisies de L1 et L0, il est ainsi possible de limiter les efforts de cisaillement et de compression dans le mélange de protecteur 7 et ainsi de faciliter le montage en évitant tout risque de blessure du bourrelet pendant cette dernière phase de mise en place.

Avec la figure 4, on explique maintenant une méthode de construction d'un profil externe 8 d'un bourrelet selon l'invention. Pour ce faire, on trace dans un premier temps le profil d'une jante de montage 10, représenté en traits pointillés sur la figure 4. On positionne ensuite l'armature de renforcement circonférentiel de bourrelet, ici une tringle 4 de bourrelet pour laquelle est précisée le centre de rotation 41 dans une déformation de torsion dans le plan de la figure (plan contenant l'axe de rotation 15). On construit ensuite un profil de siège 81 de bourrelet en le décalant radialement vers l'intérieur (c'est-à-dire vers l'axe de rotation) par rapport au profil de siège 11 de jante afin de tenir compte de la compression des matériaux composant le bourrelet entre la tringle et le siège de jante. Ce profil de siège 81 s'étend axialement vers l'extérieur jusqu'à un point B et peut par exemple adopter un profil sensiblement identique et parallèle à celui du siège 11 de jante. Bien entendu toute autre forme de profil peut convenir.

Ensuite, on construit un profil latéral 83 décalé axialement vers l'extérieur par rapport au profil latéral 12 de la saillie de la jante. Ce profil s'étend à partir d'un point A et est décalé d'une quantité tenant compte de la compression des matériaux du bourrelet contre la saillie 12 une fois le bourrelet en place.

Pour terminer, le profil de raccordement entre le point B du profil de siège et le point A du profil latéral est choisi pour être tel que la distance maximale L1 du centre de rotation 41 de la tringle 4 à tout point du profil de raccordement 82, à l'exception des points A et B d'extrémité dudit profil de raccordement, et la distance minimale L0 dudit centre de rotation 41 au profil latéral 83 satisfont la relation : (L1-L0)/L1 < 1%.

Dans le cas présent, le profil entre A et B est au moins en partie radialement à l'extérieur du profil de raccordement de la jante reliant le siège de jante à la saillie de la même jante. Ce profil peut être sensiblement rectiligne ou prendre toute autre forme géométrique.

Le profil de raccordement 82 entre les points A et B forme un secteur angulaire ayant pour sommet le centre de rotation 41 de la tringle 4 et qui est limité par une droite D1 passant par le point B et par une droite D2 passant par le point A. Préférentiellement, l'angle $\alpha$ de ce secteur est au moins égal à 10°.

## Revendications

1.  Pneumatique destiné à être monté sur une jante de montage comprenant des sièges (11) de jante inclinés vers l'extérieur, c'est-à-dire que ces sièges (11) de jante ont une forme tronconique dont la génératrice est inclinée par rapport à l'axe de rotation, les points axialement les plus à l'extérieur de chaque génératrice étant situés sur un cercle de diamètre inférieur à celui du cercle sur lequel sont situés les points de la même génératrice axialement les plus à l'intérieur, chaque siège (11) se prolongeant axialement vers l'extérieur par une saillie (12) (ou hump), cette saillie, vue dans un plan de coupe méridien, étant reliée à la génératrice du siège par profil de raccordement (13), le pneumatique comprenant des bourrelets destinés à venir en contact avec la jante de montage, chaque bourrelet (1) comprenant une armature de renforcement circonférentie (4) destinée à ancrer une armature de carcasse (2) du pneumatique, l'armature de renforcement circonférentiel (4) ayant un centre de rotation (41) autour duquel ladite armature (4), vue dans un plan méridien (c'est-à-dire contenant l'axe de rotation), tourne pendant le mouvement final de mise en place du bourrelet sur la jante, le profil externe (8) du bourrelet, vu en coupe méridienne, comprenant une partie formant siège (81) de bourrelet, cette partie (81) étant destinée à venir en contact avec le siège (11) de jante, ce siège de bourrelet (81) étant prolongé axialement et radialement vers l'extérieur par une paroi latérale (83) destinée à venir en contact avec la paroi tronconique de saillie (12) de la jante de montage, le siège (81) de bourrelet étant réuni à la paroi latérale par un profil de raccordement (82),
    au moins un bourrelet (1) étant **caractérisé en ce que** le profil de raccordement (82) entre le siège (81) de bourrelet et la paroi latérale (83) dudit bourrelet est tel que la distance maximale L1 du centre de rotation (41) de l'armature de renforcement circonférentiel (4) de bourrelet aux points du profil de raccordement (82) du bourrelet et la distance minimale L0 du centre de rotation (41) de l'armature de renforcement circonférentiel (4) de bourrelet au profil latéral de bourrelet (83) satisfont la relation suivante :

$$K < 1\%, \text{ avec } K = (L1-L0)/L1$$

2.  Pneumatique selon la revendication 1 **caractérisé en ce que** le rapport K est inférieur à 0.6%.

3.  Pneumatique selon la revendication 1 ou la revendication 2 **caractérisé en ce que** le rapport K est choisi de façon que les contraintes de compression dans la partie du bourrelet correspondant au profil de raccordement (82) soient très inférieures à la contrainte de compression du matériau du bourrelet en contact avec la jante et correspondant à une déformation de compression de 1 %.

**4.** Méthode de construction d'un profil d'un bourrelet de pneumatique destiné à être monté sur une jante de montage permettant de réduire les difficultés de montage du pneumatique sur sa jante de montage, cette jante de montage comprenant :

des sièges (11) de jante inclinés vers l'extérieur, c'est-à-dire que ces sièges de jante ont une forme tronconique dont la génératrice est inclinée par rapport à l'axe de rotation, les points axialement les plus à l'extérieur de chaque génératrice étant situés sur un cercle de diamètre inférieur à celui du cercle sur lequel sont situés les points de la même génératrice axialement les plus à l'intérieur, chaque siège se prolongeant axialement vers l'extérieur par une saillie (12) (ou hump), cette saillie ayant une paroi tronconique dont la génératrice est inclinée de façon à être sensiblement perpendiculaire à la génératrice du siège qu'elle prolonge, ladite génératrice de paroi de saillie étant, vue en coupe méridienne (c'est-à-dire dans un plan contenant l'axe de rotation), reliée à la génératrice du siège par profil de raccordement (13) en forme d'arc de cercle de rayon R,
le pneumatique comprenant
des bourrelets (1) destinés à venir en contact avec la jante de montage, chaque bourrelet comprenant une armature circonférentielle de renforcement destinée à ancrer une armature de carcasse du pneumatique,
le profil externe du bourrelet, vu en coupe méridienne, comprenant une partie formant siège (81) de bourrelet, cette partie (81) étant destinée à venir en contact avec le siège (11) de jante, ce siège de bourrelet étant prolongé axialement et radialement vers l'extérieur par une paroi latérale (83) destinée à venir en contact avec la paroi tronconique de saillie (12) de la jante de montage,
la méthode étant **caractérisée en ce que**

- on fait un relevé, dans un plan contenant l'axe de rotation, du profil de la jante comprenant en particulier le profil du siège (11), le profil de la saillie (12) et le profil du raccordement (13) entre le siège et la saillie ;
- on place l'armature de renforcement circonférentiel (4) de bourrelet dans la position qu'elle occupe une fois le pneumatique monté sur sa jante ;
- on construit le profil (8) de bourrelet externe à partir du profil de jante, c'est-à-dire en reproduisant au moins en partie le profil du siège de jante et au moins en partie le profil de la saillie de jante, le profil de raccordement (82) du profil de bourrelet étant construit de manière à être situé, au moins partiellement, radialement à l'extérieur du profil de raccordement (13) entre le siège (11) de jante et la saillie (12) de jante.

**5.** Méthode de construction d'un profil d'un bourrelet selon la revendication 4 **caractérisée en ce qu'**on modifie les profils de siège (81) et de paroi latérale (83) de bourrelet en ajoutant les déformations de compression des matériaux composant le bourrelet, lesdites déformations résultant du montage du pneumatique sur sa jante.

## Claims

**1.** A tire designed to be mounted on a mounting rim comprising rim seats (11) that are inclined outwards, that is to say that these rim seats (11) have a frustoconical shape, the generatrix of which is inclined with respect to the axis of rotation, the axially outermost points of each generatrix lying on a circle of a diameter smaller than that of the circle on which the axially innermost points of the same generatrix lie, each seat (11) being extended axially outwards by a projection (12) (or hump), this hump, viewed in meridian cross section, being connected to the generatrix of the seat by a connecting profile (13), the tire comprising beads designed to come into contact with the mounting rim, each bead (1) comprising a circumferential reinforcement (4) designed to anchor a carcass reinforcement (2) of the tire, the circumferential reinforcement (4) having a center of rotation (41) about which said reinforcement (4), when viewed in a meridian plane (that is to say a plane containing the axis of rotation) rotates during the final movement of fitting the bead onto the rim, the external profile (8) of the bead, viewed in meridian cross section, comprising a bead seat forming part (81), this part (81) being designed to come into contact with the rim seat (11), this bead seat (81) being extended axially and radially outwards by a side wall (83) designed to come into contact with the frustoconical wall of the hump (12) of the mounting rim, the bead seat (81) being connected to the side wall by a connecting profile (82),
at least one bead (1) being **characterized in that** the connecting profile (82) between the bead seat (81) and the side wall (83) of said bead is such that the maximum distance L1 from the center of rotation (41) of the circumferential bead reinforcement (4) to the points on the bead connecting profile (82) and the minimum distance L0 from the center of rotation (41) of the circumferential bead reinforcement (4) to the lateral bead profile (83) satisfy the following relationship:

$$K < 1\%, \text{ where } K = (L1 - L0)/L1.$$

**2.** The tire as claimed in claim 1, **characterized in that** the ratio K is lower than 0.6%.

**3.** The tire as claimed in claim 1 or claim 2, **characterized in that** the ratio K is chosen such that the compressive stresses **in that** part of the bead that corresponds to the connecting profile (82) are very much lower than the compressive stress in the material of the bead in contact with the rim and corresponding to a compressive deformation of 1%.

**4.** A method of constructing a profile of a tire bead intended to be mounted on a mounting rim making it possible to reduce the difficulties experienced in mounting the tire on its mounting rim, this mounting rim comprising:

rim seats (11) that are inclined outwards, that is to say that these rim seats have a frustoconical shape, the generatrix of which is inclined with respect to the axis of rotation, the axially outermost points of each generatrix lying on a circle of a diameter smaller than that of the circle on which the axially innermost points of the same generatrix lie, each seat being extended axially outwards by a projection (12) (or hump), this hump having a frustoconical wall, the generatrix of which is inclined in such a way as to be more or less perpendicular to the generatrix of the seat that it extends, said wall generatrix of the hump being, viewed in meridian cross section (that is to say in a plane containing the axis of rotation), connected to the generatrix of the seat by a connecting profile (13) in the form of an arc of a circle of radius R,
the tire comprising
beads (1) designed to come into contact with the mounting rim, each bead comprising a circumferential reinforcement designed to anchor a carcass reinforcement of the tire,
the external profile of the bead, viewed in meridian cross section, comprising a bead seat forming part (81), this part (81) being designed to come into contact with the rim seat (11), this bead seat being extended axially and radially outwards by a side wall (83) designed to come into contact with the frustoconical wall of the hump (12) of the mounting rim,
the method being **characterized in that**

- the profile of the rim, comprising in particular the profile of the seat (11), the profile of the hump (12) and the profile of the connecting profile (13) between the seat and the hump is scanned in a plane containing the axis of rotation;
- the circumferential bead reinforcement (4) is placed in the position that it occupies once the tire has been mounted on its rim;
- the external bead profile (8) is constructed from the rim profile, that is to say at least partially reproducing the profile of the rim seat and at least partially reproducing the profile of the rim hump, the connecting profile (82) of the bead profile being constructed in such a way that it lies, at least partially, radially on the outside of the connecting profile (13) between the rim seat (11) and the rim hump (12).

**5.** The method of constructing a bead profile as claimed in claim 4, **characterized in that** the bead seat (81) and side wall (83) profiles are modified by adding the compressive deformations of the materials of which the bead is made, said deformations being the result of mounting the tire on its rim.

**Patentansprüche**

**1.** Reifen, der dazu bestimmt ist, auf einer Montagefelge montiert zu werden, umfassend Felgensitze (11), die nach außen geneigt sind, das heißt, dass diese Felgensitze (11) eine kegelförmige Form aufweisen, wobei die Erzeugende davon hinsichtlich der Drehachse geneigt ist, wobei die axial am weitesten außen von jeder Erzeugenden liegenden Punkte auf einem Kreis mit einem Durchmesser angeordnet sind, der kleiner als derjenige des Kreises ist, auf dem die Punkte derselben Erzeugenden angeordnet sind, die axial am weitesten innen liegen, wobei sich jeder Sitz (11) axial nach außen durch einen Vorsprung (12) (oder Hump) fortsetzt, wobei dieser Vorsprung, im Meridian-Querschnitt gesehen, durch ein Anschlussprofil (13) mit der Erzeugenden des Sitzes verbunden ist, wobei der Reifen Wülste umfasst, die dazu bestimmt sind, mit der Montagefelge in Kontakt zu kommen, wobei jeder Wulst (1) eine umlaufende Verstärkungsarmierung (4) umfasst, die dazu bestimmt ist, eine Karkassenarmierung (2) des Reifens zu verankern, wobei die umlaufende Verstärkungsarmierung (4) ein Drehzentrum (41) aufweist, um welches sich die Armierung (4), in der Meridian-Ebene gesehen (das heißt die Drehachse enthaltend), während der Schlussbewegung des Setzens des Wulstes auf die Felge dreht, wobei das Außenprofil (8) des Wulstes, im Meridian-Schnitt gesehen, einen den Wulstsitz bildenden Teil (81) umfasst, wobei der Teil (81) dazu bestimmt ist, mit dem Felgensitz (11) in Kontakt zu kommen, wobei der Wulstsitz (81) axial und radial nach außen durch eine Seitenwand (83) fortgesetzt wird, welche dazu bestimmt ist, mit der kegelförmigen Wand des Vorsprungs (12) der Montagefelge in Kontakt zu kommen, wobei der Wulstsitz (81) durch ein Anschlussprofil (82) mit der Seitenwand verbunden ist,

wobei mindestens ein Wulst (1) **dadurch gekennzeichnet ist, dass** das Anschlussprofil (82) zwischen dem Wulstsitz (81) und der Seitenwand (83) des Wulstes derart ist, dass der Höchstabstand L1 vom Drehzentrum (41) der umlaufenden Verstärkungsarmierung (4) des Wulstes zu den Punkten des Anschlussprofils (82) des Wulstes und der Mindestabstand L0 vom Drehzentrum (41) der umlaufenden Verstärkungsarmierung (4) des Wulstes zum Seitenprofil des Wulstes (83) die folgende Gleichung erfüllen:

$$K < 1\ \%,\ \text{wobei}\ K = (L1-L0)/L1$$

2. Reifen nach Anspruch 1, **dadurch gekennzeichnet, dass** das Verhältnis K kleiner als 0,6 % ist.

3. Reifen nach Anspruch 1 oder Anspruch 2, **dadurch gekennzeichnet, dass** das Verhältnis K derart ausgewählt ist, dass die Druckspannungen im Teil des Wulstes, der dem Anschlussprofil (82) entspricht, weitaus niedriger sind als die Druckspannung des Wulstmaterials, das mit der Felge in Kontakt ist und einer Druckverformung von 1 % entspricht.

4. Verfahren zur Herstellung eines Wulstprofils eines Reifens, der dazu bestimmt ist, auf einer Montagefelge montiert zu werden, wodurch sich die Schwierigkeiten bei der Montage des Reifens auf seiner Montagefelge reduzieren lassen, wobei die Montagefelge umfasst:

Felgensitze (11), die nach außen geneigt sind, das heißt, dass diese Felgensitze eine kegelförmige Form aufweisen, wobei die Erzeugende davon hinsichtlich der Drehachse geneigt ist, wobei die axial am weitesten außen von jeder Erzeugenden liegenden Punkte auf einem Kreis mit einem Durchmesser angeordnet sind, der kleiner als derjenige des Kreises ist, auf dem die Punkte derselben Erzeugenden angeordnet sind, die axial am weitesten innen liegen, wobei sich jeder Sitz axial nach außen durch einen Vorsprung (12) (oder Hump) fortsetzt, wobei dieser Vorsprung eine kegelförmige Wand aufweist, deren Erzeugende derart geneigt ist, dass sie im Wesentlichen senkrecht zur Erzeugenden des Sitzes liegt, welche sie fortsetzt, wobei die Erzeugende der Wand des Vorsprungs, im Meridian-Schnitt gesehen (das heißt auf einer Ebene, die die Drehachse enthält), durch ein Anschlussprofil (13) in Form eines Kreisbogens des Radius R mit der Erzeugenden des Sitzes verbunden ist, wobei der Reifen umfasst:

Wülste (1), die dazu bestimmt sind, mit der Montagefelge in Kontakt zu kommen, wobei jeder Wulst eine umlaufende Verstärkungsarmierung umfasst, die dazu bestimmt ist, eine Karkassenarmierung des Reifens zu verankern,

das Außenprofil des Wulstes, im Meridian-Schnitt gesehen, umfassend einen einen Wulstsitz bildenden Teil (81), wobei dieser Teil (81) dazu bestimmt ist, mit dem Felgensitz (11) in Kontakt zu kommen,

wobei sich dieser Wulstsitz axial und radial durch eine Seitenwand (83) nach außen fortsetzt, welche dazu bestimmt ist, mit der kegelförmigen Wand des Vorsprungs (12) der Montagefelge in Kontakt zu kommen, wobei das Verfahren **dadurch gekennzeichnet ist, dass**

- in einer Ebene, welche die Drehachse enthält, eine Aufzeichnung des Felgenprofils, das insbesondere das Sitzprofil (11), das Vorsprungprofil (12) und das Anschlussprofil (13) zwischen dem Sitz und dem Vorsprung umfasst, erstellt wird;
- die umlaufende Verstärkungsarmierung (4) des Wulstes in die Position gesetzt wird, welche sie einnimmt, sobald der Reifen auf seiner Felge montiert worden ist;
- das äußere Wulstprofil (8) aus dem Felgenprofil hergestellt wird, das heißt, indem mindestens zum Teil das Profil des Felgensitzes und mindestens zum Teil das Profil des Felgenvorsprungs reproduziert werden, wobei das Anschlussprofil (82) des Wulstprofils derart hergestellt wird, dass es mindestens teilweise radial außerhalb des Anschlussprofils (13) zwischen dem Felgensitz (11) und dem Felgenvorsprung (12) angeordnet ist.

5. Verfahren zur Herstellung eines Wulstprofils nach Anspruch 4, **dadurch gekennzeichnet, dass** das Sitzprofil (81) und das Seitenwandprofil (83) des Wulstes modifiziert werden, indem die Druckverformungen der Materialien, die den Wulst ausmachen, hinzugegeben werden, wobei sich diese Verformungen aus der Montage des Reifens auf seiner Felge ergeben.

FIG. 1

FIG. 2

FIG. 3

FIG. 4

**RÉFÉRENCES CITÉES DANS LA DESCRIPTION**

**Documents brevets cités dans la description**

- US 20040194865 A
- WO 9523073 A

- US 5836366 A